# FASCICULE DE BREVET EUROPEEN

(11) **EP 4 214 382 B1**
(45) Date de publication et mention de la délivrance du brevet: **17.07.2024**
(21) Numéro de dépôt: 21798097.8
(22) Date de dépôt: 14.09.2021
(51) Int. Cl.: A01G 13/06, A01G 17/06, H05B 3/26, H05B 3/36, E04G 9/10, E04G 11/06, H05B 3/14, H05B 3/34

(54) **DISPOSITIF DE CHAUFFAGE ET/OU DE REFROIDISSEMENT D'UN BÂTIMENT**
VORRICHTUNG ZUM HEIZEN UND/ODER KÜHLEN EINES GEBÄUDES
DEVICE FOR HEATING AND/OR COOLING A BUILDING

(30) Priorité: 15.09.2020 CH 11632020
(43) Date de publication de la demande: 26.07.2023
(73) Titulaire: Graphenaton Technologies SA, 1204 Genève (CH)
(72) Inventeur: MULLER, Patrick, 1296 Coppet (CH)
(74) Mandataire: Odoom, Ernest
(86) Numéro de dépôt international: PCT/IB2021/058350
(87) Numéro de publication internationale: WO 2022/058880

(56) Documents cités:
- CN-A- 110 913 515
- KR-A- 20100 027 508
- KR-A- 20120 119 378
- KR-A- 20160 009 712
- KR-B1- 101 834 508
- US-A1- 2020 248 465

## Description

La présente invention se rapporte à un dispositif de chauffage et/ou de refroidissement d'un bâtiment. En particulier, le dispositif comporte un film apte à diffuser de la lumière infrarouge et pouvant comporter des composants électroniques et afin de gérer la sécurité des personnes et des bâtiments et le confort grâce à la domotique.

Pour chauffer une pièce, notamment une habitation, il est courant de disposer de radiateur dans certaines pièces. De même pour refroidir une pièce, on est amené à installer une climatisation.

WO2013179341A1 décrit un film chauffant comprenant un élément chauffant plan qui présente une paire de bornes, une paire de fils conducteurs soudés aux bornes et deux feuilles de film polyamide thermoplastique qui sont respectivement stratifiées sur les surfaces de l'élément chauffant plan par soudage thermique et qui maintiennent ledit élément chauffant plan dans un état étanche. Dans le film chauffant, les films de polyamide thermoplastique peuvent être soudés de manière hermétique par soudage thermique sur l'élément chauffant plan de manière à l'étanchéifier. KR20160009712A décrit un appareil planaire chauffant.

Les principaux problèmes de ces solutions sont des mises en oeuvre compliquées et des consommations élevées pour une utilisation primaire à savoir le chauffage ou le refroidissement.

Un autre but de la présente invention est de proposer une solution de chauffage / refroidissement et gestion de la domotique qui soit plus rapide à mettre en oeuvre, plus performante et ne produisant aucun rejet carbone et répondant aux exigences de standards de la construction, notamment la nouvelle norme RT2020 ou MOPEC en Suisse.

L'utilisation du dispositif de la présente invention permet de dissimuler les chauffages et les climatiseurs et de tout centraliser. Cette solution discrète offre des performances énergétiques élevées et des avantages économiques non négligeables.

Le but de cette invention est de proposer une solution à faibles coûts d'investissement, d'exploitation, qui soit fiable dans le temps et qui soit facile et rapide à installer. Cet objectif et d'autres sont réalisés par un dispositif de chauffage selon la revendication 1.

Le dispositif de chauffage et/ou de refroidissement comporte un film apte à diffuser de la lumière infrarouge pour diffuser de la chaleur. Le film comprend un élément chauffant plan comportant un connecteur relié électriquement à des pistes conductrices disposées sur le film reliable à un thermostat. Le film reçoit une encre conductrice déposée sur le film par sérigraphie ou jet d'encre, le film étant apte à diffuser de la lumière infrarouge pour diffuser de la chaleur ou du froid sur des corps ou des objets disposés dans sa proximité sans diffuser de chaleur ou du froid dans l'espace. Par ailleurs, le film est agencé pour recevoir des capteurs et/ou des moyens de radio-identification.

Dans une forme d'exécution, l'encre conductrice est déposée sur le film par sérigraphie.

Selon l'invention, le film reçoit une couche de résine dans des creusures formant des sillons recevant de l'encre recouverte d'une autre couche de résine.

En général, les creusures sont créées par une gravure par technique laser au CO2 ou YAG. La qualité exceptionnelle du faisceau permet de réaliser des marquages nets et précis sur la feuille.

Dans une forme d'exécution, l'encre est une encre à base de nanotubes de carbone, notamment du graphène.

Le film peut être alimenté sous plusieurs tensions notamment en 12V, 24V, 48V, 110V ou 220V. Le film peut également être alimenté par une énergie solaire. Les puissances également sont variables

Le film est régulé par le thermostat et un smartphone. Le film a une plage de température opérationnelle de 16°C à 28°C en chauffe, notamment lorsque la chaleur provient du sol.

Grâce au présent dispositif, la température ambiante peut être abaissée de dix degrés Celsius.

Dans des zones où la température est très élevée, le film comporte une sonde de Peltier pour abaisser la température ambiante de jusqu'à quarante degrés Celsius.

Dans une forme d'exécution, le film intègre des capteurs liés à la sécurité des biens et/ou des capteurs liés à la sécurité des personnes.

Dans une autre forme d'exécution, le film comporte des composants permettant la supervision et un contrôle d'un bâtiment dans lequel il est disposé. (AI, écran virtuel).

Dans toutes les formes d'exécutions précédemment décrites, le film ne dépasse jamais 0,36mm d'épaisseur, hors connecteurs.

Dans une forme d'exécution, un panneau réflecteur peut-être disposé de manière superposée par rapport au film, par-dessus ou par-dessous ou derrière le dispositif, le panneau réflecteur étant d'une épaisseur allant jusqu'à 0,6cm.

De préférence, le dispositif est sous forme de feuilles rectangulaire non enroulables.

Le dispositif présente l'avantage de pouvoir être posé, sous un revêtement, au sol, au plafond, sur un mur, derrière un miroir, sur un élément déplaçable tel un tableau, voire même sous une couche de bitume. Bien évidemment, pour chacune de ces utilisations, la mise en oeuvre du dispositif est adaptée.

Les caractéristiques de l'invention apparaitront plus clairement à la lecture de la description de plusieurs formes d'exécution données uniquement à titre d'exemple, nullement limitative en se référant aux figures schématiques, dans lesquelles :
- La figure 1 représente une vue de dessus d'une feuille chauffante/ rafraichissante en PET selon la présente invention ;
- La figure 2 représente une vue de dessus de trois feuilles de la figure 1 reliées électriquement entre elles ;
- La figure 3 représente une vue en coupe du dispositif agencé au sol ;
- La figure 4 représente une vue en coupe du dispositif agencé au mur ;
- La figure 5 représente une vue en coupe du dispositif agencé au plafond ;
- La figure 6 représente une vue en coupe du dispositif agencé sur un tableau ;
- La figure 7 représente une vue en coupe d'un film du dispositif dans lequel une creusure dans une résine comporte une encre conductrice.

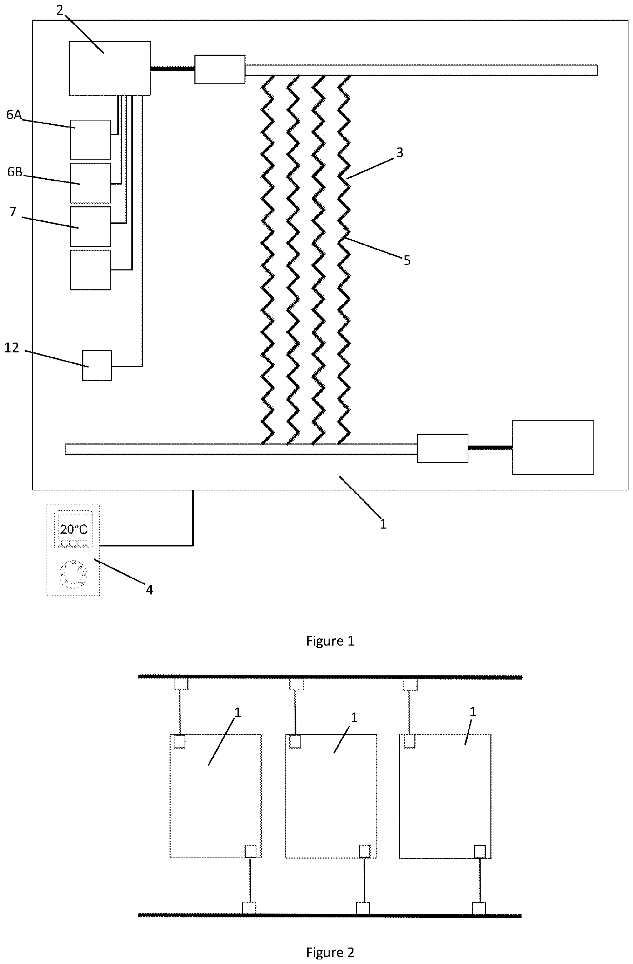

Comme illustré à la figure 1, un dispositif de chauffage et/ou de refroidissement comporte un film 1 apte à diffuser de la lumière infrarouge pour diffuser de la chaleur. Le film 1 comprend un élément chauffant plan comportant un connecteur 2 relié électriquement à des pistes conductrices 3 disposées sur ledit film 1 reliable à un thermostat 4. Le film 1 reçoit une encre conductrice 5 déposée sur le film par sérigraphie. Le film 1 est apte à diffuser de la lumière infrarouge pour diffuser de la chaleur ou du froid sur des corps ou des objets disposés dans sa proximité sans diffuser de chaleur ou du froid dans l'espace. Le film 1 est agencé pour recevoir des capteurs 6A, 6B et des moyens de radio-identification 7 sous la forme d'un tag RFID.

Sur un film souple en polymère, tel que du P.E.T, répondant aux exigences antifeu et constituant une première couche du film 1, il est appliqué par gravure laser, une encre 5 à base de nanotubes de carbone, du graphène, sur 7 microns.

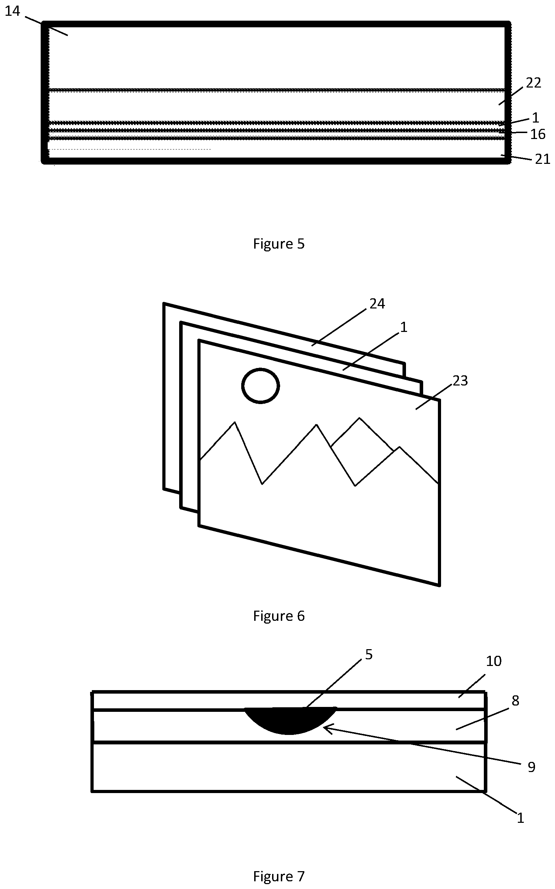

En premier lieu, une résine 8 (voir figure 7) est déposée sur ce film 1. Ensuite, cette résine est creusée de manière à former des sillions ou creusures 9 (voir figure 7) dans lesquels est déposée une encre 5 par technique de sérigraphie.

Les sillons 9 (voir figure 7) sont créés par une gravure par technique de laser à impulsion sur de très faibles épaisseurs. Une seconde couche de résine 10 (voir figure 7) est déposée après l'intégration de l'encre 5 de manière à rendre étanche la feuille 1 et éviter l'utilisation d'un deuxième film pour rendre l'ensemble parfaitement étanche à l'eau.

Dans cet exemple, l'épaisseur du film est de 360 microns mais peut être différent en fonction de l'utilisation.

Chaque film 1 comporte des connecteurs 2 pour relier électriquement un premier film 1 avec un second film 1 ou pour intégrer un composant électronique 12 sur le film.

La connectique est simple, robuste pour un montage facile et permet d'éviter tout mauvais fonctionnement. La connectique est également conforme aux normes de sécurité en vigueur et ne pas être interchangeable, pour éviter une mauvaise ou fausse réparation. Dans cet exemple, la connectique se fait avec des encres conductrices en nanotubes d'argent sur 2 microns.

Si dans cet exemple le matériau de support constituant le film 1 est une feuille en PET, d'autres feuilles polymères peuvent également être considérées, tout comme des feuilles comportant un dépôt métallisé réfléchissantes dans le but de générer un chauffage/refroidissement directionnel.

Dans l'exemple illustré à la figure 2, trois films 1 sont reliés électriquement par un montage en parallèle. Les feuilles chauffantes/refroidissantes mesurent chacune 0.5mx0.5m. Dans d'autres exemples non illustrés, les feuilles peuvent mesurer 0.5mx1m voire d'autres dimensions en fonction de l'application.

La connectique est assurée de manière simple et robuste avec et facile au montage, ou à la pose de ses feuilles chauffantes. La connectique est agencée de manière à garantir une sécurité électrique, pour des applications dans différents environnements notamment les applications dans des salles de bains.

Afin d'assurer une traçabilité et une authenticité, chaque feuille comporte un tag RFID 7. Ce tag RFID 7 est directement imprimé lors de la fabrication du film ou collé à l'intérieur. Ce n'est pas un élément additionnel qui viendrait s'ajouter au film et qui permettrait d'être enlevé.

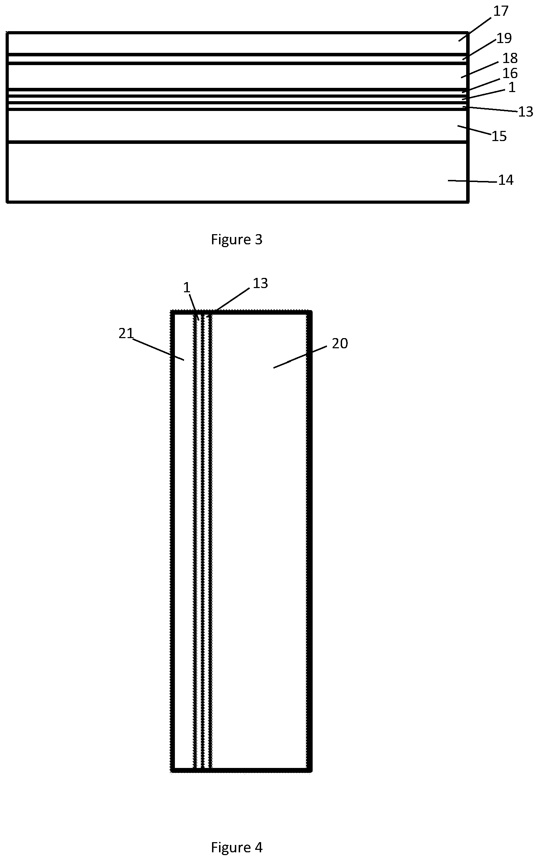

Comme illustré à la figure 3, un dispositif de chauffage et/ou refroidissement est agencé au sol d'un bâtiment. Dans cette exécution, une dalle 14 constituant une plateforme stable reçoit une chape 15 coulée sur la plateforme puis un panneau réflecteur 13 de chaleur/froid couvrant la dalle sur laquelle le panneau réflecteur 13 est disposé. Le réflecteur 13 est un film de faible épaisseur, principalement d'aluminium qui permet d'orienter le rayonnement dans la direction voulue. Celui-ci est constitué d'une couche simple ou de multiples couches selon l'utilisation voulus. Différentes couches ayant différentes fonctions (isolante, insonore, ...) pourront être associées à ce réflecteur. Il pourra être séparé du film chauffant ou solidaire. Dans cet exemple, le panneau réflecteur est d'une épaisseur allant jusqu'à 0,5cm. Le dispositif comporte en outre un film 1 chauffant/refroidissant électrique infrarouge agencé, sur le panneau réflecteur 13, pour diffuser des rayons infrarouges dans un espace à chauffer/refroidir. Un pare-vapeur 16 est agencé sur le film 1 sur toute la surface de la dalle, le pare-vapeur dépassant d'au moins 1 cm sur toute la périphérie de la dalle, le pare-vapeur assurant une étanchéité totale.

Dans la forme d'exécution illustrée, en particulier lorsqu'un revêtement du type carrelage est posé, une couche 18 comportant un mélange de sable est coulée sur le pare-vapeur avant que ne soit posée un carrelage 17 sur lequel est enduite entre le carrelage 17 et le pare-vapeur une colle 19 de carrelage.

Dans le cas d'une utilisation pour du chauffage, l'intensité consommée par le film chauffant est 0,36A pour une production de chauffage 80W/m2. En fonction de la pièce à chauffer, le film chauffant 80W/m2 suffisent pour un chauffage au sol dans les habitations neuves ou très bien isolées. La pose de films 140W/m2 est prévue pour chauffer par le sol les pièces bien isolées. Des films chauffants 220W/m2 permettent de répondre aux espaces peu isolés.

Sur le même principe que le paragraphe ci-dessus, c'est la fonction de l'encre qui donnera la production de chaud ou de froid. Ainsi, grâce au thermostat, il est possible de réguler la température de la pièce de manière à gérer du chaud ou du froid dans la pièce.

Grâce au même film de la présente invention, il est donc possible de gérer du chaud et/ou du froid pour une plage de températures allant de 16°C à 28°C. En ce qui concerne la gestion du froid, sans élément additionnel, il est possible de refroidir de 10°C la température ambiante d'une pièce.

Pour des écarts de température plus importants, au-delà de 10°C, des sondes de Peltier agencées sur le film permettront de refroidir de 40°C la température ambiante de la pièce.

Comme illustré à la figure 4, un dispositif de chauffage et/ou refroidissement est agencé au mur d'un bâtiment. Dans cette exécution, un mur 20 constituant une plateforme stable reçoit un panneau réflecteur 13 de chaleur/froid couvrant le mur 20 sur lequel le panneau réflecteur 13 est disposé. Le réflecteur est un film de faible épaisseur, principalement d'aluminium qui permet d'orienter le rayonnement dans la direction voulue. Le dispositif comporte en outre un film 1 chauffant/refroidissant agencé, sur le panneau réflecteur, pour diffuser des rayons infrarouges dans un espace à chauffer/refroidir. Un revêtement en placoplâtre du type BA13 est agencé sur le film sur toute la surface du mur.

Dans la forme d'exécution illustrée à la figure 5, un dispositif de chauffage et/ou refroidissement est agencé au plafond d'un logement. Dans cette exécution, une dalle 14 constituant une plateforme stable reçoit, empilés les uns sur autre en partant de la dalle 14 constituant le plafond, un isolant 22 du type laine verre, puis le film 1 chauffant/refroidissant puis un pare vapeur puis un revêtement en placoplâtre 21 du type BA13.

Dans la forme d'exécution illustrée à la figure 6, un dispositif de chauffage et/ou refroidissement est agencé sur un tableau décoratif. Dans ce cas, le dispositif 1 est agencé entre une toile peinte 23 et un support 24 constituant un fond.

Pour assurer une sécurité des biens et des personnes sans pour autant complexifier la fabrication du dispositif ou l'installation, le dispositif de la présente invention utilise des capteurs imprimables permettant ainsi de miniaturiser ceux-ci au maximum.

Ainsi, pour une grande majorité des cas, les feuilles seront fabriquées avec des capteurs qui seront directement intégrés. Toutefois, il est également prévu de positionner des antennes pour des capteurs qui seraient installés dans un second temps, et dans ce cas, la connectique avec l'encre pourra se faire par des résines.

Par exemple, pour localiser et identifier le lieu d'un incident une micro-puce GPS sera incluse dans le support de film. Ainsi, le déclenchement d'un détecteur de fumée, déclenchera la géolocalisation du film.

Le dispositif comporte une interface disposée sur le film pour permettre une communication en LIFI, c'est-à-dire basée sur la lumière, de manière à ne pas utiliser le mode classique de transmission des informations qui est le wifi et qui génère des ondes électromagnétiques. Ainsi les transmissions d'informations pourront se faire à l'intérieur d'un bâtiment à une vitesse 100 fois supérieure à celle du wifi.

Des composants permettant de gérer la domotique du bâtiment sont également agencées dans le film. Il est donc prévu d'intégrer des capteurs et composants électroniques pour commander des appareils par la parole, tout comme des composants et capteurs pour gérer la commande de fenêtres, portes,...

Des fonctions liées à la sécurité des personnes sont prévues notamment à l'aide de capteurs permettant une assistance et un suivi médical d'une personne présente dans le logement.

Grâce à différents composants électroniques et capteurs agencés sur le film du dispositif, il est également possible de contrôler le rythme cardiaque d'une personne qui suivrait un cours de sport donné grâce à un hologramme.

Le présent dispositif, relié à une unité de contrôle, permet également de suivre la consommation énergétique dans chaque pièce, par exemple dans un hôtel.

Un des nombreux avantages d'utiliser le présent dispositif réside dans les faibles coûts d'investissement et d'exploitation d'autant qu'il ne nécessite aucun entretien. L'installation d'un tel dispositif s'effectue de façon rapide même dans les cas de rénovation.

Un autre avantage est que le dispositif procure une chaleur ou un refroidissement doux et homogène, en restant silencieux, et permet d'atteindre la température voulue rapidement, par exemple moins de 15 minutes pour passer de 18°C à 25°C.

Grâce à la présente invention, un utilisateur aura un meilleur confort et préservera l'environnement, tout en bénéficiant d'une efficacité élevée et d'économies d'énergie.

## Revendications

1. Dispositif de chauffage et/ou de refroidissement comportant un film (1) apte à diffuser de la lumière infrarouge pour diffuser de la chaleur, le film (1) comprenant un élément chauffant plan comportant un connecteur (2) relié électriquement à des pistes conductrices (3) disposées sur ledit film reliable à un thermostat (4), ledit film (1) étant apte à diffuser de la lumière infrarouge pour diffuser de la chaleur ou du froid sur des corps ou des objets disposés dans sa proximité sans diffuser de chaleur ou du froid dans l'espace, **caractérisé en ce que** lesdits pistes conductrices sont formées par une pluralité de sillons (9) gravés par laser dans une première couche de résine (8), lesdits sillons recevant une encre conductrice (5) déposée sur le film (1) par sérigraphie ou jet d'encre et puis recouverts par une deuxième couche de résine (10).

2. Dispositif selon la revendication 1, dans lequel les sillons sont gravés par laser à impulsion.

3. Dispositif selon l'une des revendications précédentes, dans lequel les sillons sont gravés par laser au CO2 ou YAG.

4. Dispositif selon l'une quelconque des revendications précédentes, dans lequel ledit film (1) est agencé pour recevoir des capteurs (6A, 6B) et/ou des moyens de radio-identification (7).

5. Dispositif selon l'une des revendications précédentes, dans lequel l'encre (5) est une encre à base de nanotubes de carbone, notamment du graphène.

6. Dispositif selon l'une des revendications précédentes, dont l'épaisseur du film (1) est de 0,36mm.

7. Dispositif selon l'une des revendications précédentes, dans lequel le film (1) est alimenté de 12V à 220V notamment par une énergie solaire.

8. Dispositif selon l'une des revendications précédentes, dans lequel le film (1) est régulé par le thermostat (4) et un smartphone.

9. Dispositif selon l'une des revendications précédentes, dans lequel le film (1) a une plage de température opérationnelle de 16°C à 28°C en chauffe, notamment lorsque la chaleur provient du sol.

10. Dispositif selon l'une des revendications précédentes, agencé pour abaisser la température ambiante de dix degrés Celsius.

11. Dispositif selon l'une des revendications précédentes, comportant une sonde de Peltier (11) pour abaisser la température ambiante de quarante degrés Celsius.

12. Dispositif selon l'une des revendications précédentes, dans lequel le film (1) intègre des capteurs (6A) liés à la sécurité des biens et/ou des capteurs (6B) liés à la sécurité des personnes.

13. Dispositif selon l'une des revendications précédentes, dans lequel le film (1) comporte des composants (12) permettant une unité de supervision et un contrôle d'un bâtiment dans lequel il est disposé.

14. Dispositif selon l'une des revendications précédentes, comportant un panneau réflecteur (13) disposé de manière superposée par rapport au film, par-dessus ou par-dessous ou derrière le dispositif, le panneau réflecteur (13) étant d'une épaisseur allant jusqu'à 0,6cm.

15. Dispositif selon l'une des revendications précédentes, dans lequel le film (1) est sous forme de feuilles rectangulaire non enroulable.

## Patentansprüche

1. Heiz- und/oder Kühlvorrichtung mit einer Folie (1), die geeignet ist, Infrarotlicht zu streuen, um Wärme zu verteilen, wobei die Folie (1) ein ebenes Heizelement mit einem Verbinder (2) umfasst, der elektrisch mit Leiterbahnen (3) verbunden ist, die auf der Folie (1) angeordnet sind, der mit einem Thermostat (4) verbindbar ist, wobei die Folie (1) geeignet ist, Infrarotlicht zu streuen, um Wärme oder Kälte auf Körper oder Gegenstände zu verteilen, die in ihrer Nähe angeordnet sind, ohne Wärme oder Kälte in den Raum zu verteilen, **dadurch gekennzeichnet, dass** die Leiterbahnen durch eine Vielzahl von Rillen (9) gebildet werden,
die in eine erste
Harzschicht (8) lasergraviert sind,
wobei die Rillen eine leitfähige Tinte (5) aufnehmen, die auf
der Folie (1) durch Siebdruck oder Tintenstrahldruck aufgebracht und dann mit einer zweiten Harzschicht (10) bedeckt werden.

2. Vorrichtung nach Anspruch 1, bei der die Rillen mit einem Impulslaser graviert werden.

3. Vorrichtung nach einem der vorhergehenden Ansprüche, bei der die Rillen mit einem CO2- oder YAG-Laser graviert werden.

4. Vorrichtung nach einem der vorhergehenden Ansprüche, wobei die Folie (1) so angeordnet ist, dass sie Sensoren (6A, 6B) und/oder Funkidentifizierungsmittel (7) aufnehmen kann.

5. Vorrichtung nach einem der vorhergehenden Ansprüche, wobei die Tinte (5) eine Tinte auf der Basis von Kohlenstoffnanoröhren, insbesondere Graphen, ist.

6. Vorrichtung nach einem der vorhergehenden Ansprüche, bei der die Dicke der Folie (1) 0,36 mm beträgt.

7. Vorrichtung nach einem der vorhergehenden Ansprüche, bei der die Folie (1) von 12 V bis 220 V insbesondere durch Solarenergie gespeist wird.

8. Vorrichtung nach einem der vorhergehenden Ansprüche, bei der die Folie (1) durch den Thermostat (4) und ein Smartphone geregelt wird.

9. Vorrichtung nach einem der vorhergehenden Ansprüche, wobei die Folie (1) einen Betriebstemperaturbereich von 16°C bis 28°C beim Aufheizen hat, insbesondere wenn die Wärme vom Boden kommt.

10. Vorrichtung nach einem der vorhergehenden Ansprüche, die so eingerichtet ist, dass sie die Raumtemperatur um zehn Grad Celsius senkt.

11. Vorrichtung nach einem der vorhergehenden Ansprüche mit einer Peltiersonde (11) zum Absenken der Umgebungstemperatur um vierzig Grad Celsius.

12. Vorrichtung nach einem der vorhergehenden Ansprüche, bei der die Folie (1) Sensoren (6A) im Zusammenhang mit der Sicherheit von Gütern und/oder Sensoren (6B) im Zusammenhang mit der Sicherheit von Personen integriert.

13. Vorrichtung nach einem der vorhergehenden Ansprüche, wobei die Folie (1) Komponenten (12) aufweist, die eine Überwachungseinheit und eine Kontrolle eines Gebäudes, in dem sie angeordnet ist, ermöglichen.

14. Vorrichtung nach einem der vorhergehenden Ansprüche mit einer reflektierenden Platte (13), die in Bezug auf die Folie überlagert über oder unter oder hinter der Vorrichtung angeordnet ist, wobei die reflektierende Platte (13) eine Dicke von bis zu 0,6 cm hat.

15. Vorrichtung nach einem der vorhergehenden Ansprüche, bei der die Folie (1) in Form von nicht aufrollbaren rechteckigen Blättern vorliegt.

## Claims

1. A heating and/or cooling device comprising a film (1) capable of diffusing infrared light to diffuse heat, the film (1) comprising a planar heating element comprising a connector (2) electrically connected to conductive tracks (3) arranged on said film connectable to a thermostat (4), said film (1) being capable of diffusing infrared light to diffuse heat or cold onto bodies or objects arranged in its proximity without diffusing heat or cold into the space, **characterized in that** said conductive tracks are formed by a plurality of grooves (9)
laser-etched in a first resin layer (8),
said grooves receiving a conductive ink (5) deposited on the film (1) by screen printing or ink jet printing and then covered with a second layer of resin (10).

2. The device according to claim 1, wherein the grooves are etched by pulse laser.

3. The device according to one of the preceding claims, wherein the grooves are etched by CO2 or YAG laser.

4. The device according to any of the preceding claims, wherein said film (1) is arranged to receive sensors (6A, 6B) and/or radio identification means (7).

5. The device according to one of the preceding claims, wherein the ink (5) is a carbon nanotube-based ink, in particular a graphene-based ink.

6. The device according to one of the preceding claims, wherein the film (1) is 0.36 mm thick.

7. The device according to one of the preceding claims, wherein the film (1) is powered from 12 V to 220 V, in particular by solar energy.

8. The device according to one of the preceding claims, wherein the film (1) is controlled by the thermostat (4) and a smartphone.

9. The device according to one of the preceding claims, wherein the film (1) has an operational temperature range of 16°C to 28°C when heated, particularly when the heat comes from the ground.

10. The device according to one of the preceding claims, arranged to lower the ambient temperature by ten degrees Celsius.

11. The device according to one of the preceding claims, comprising a Peltier probe (11) for lowering the ambient temperature by forty degrees Celsius.

12. The device according to one of the preceding claims, wherein the film (1) incorporates sensors (6A) linked to the safety of goods and/or sensors (6B) linked to the safety of people.

13. The device according to one of the preceding claims, wherein the film (1) comprises components (12) enabling a supervision unit and a control of a building wherein it is arranged.

14. The device according to one of the preceding claims, comprising a reflector panel (13) arranged superimposed with respect to the film, above or below or behind the device, the reflector panel (13) being up to 0.6 cm thick.

15. The device according to one of the preceding claims, wherein the film (1) is in the form of non-rollable rectangular sheets.
